# EUROPEAN PATENT SPECIFICATION

(11) **EP 1 607 656 B1**
(45) Date of publication and mention of the grant of the patent: **24.08.2011**
(21) Application number: 05007770.0
(22) Date of filing: 08.04.2005
(51) Int. Cl.: F16G 13/06, B21L 9/06

(54) **Chain**
Kette
Chaîne

(30) Priority: 18.06.2004 JP 2004181192
(43) Date of publication of application: 21.12.2005
(73) Proprietor: Tsubakimoto Chain Co., Osaka 530-0018, (JP); Izumi Chain Mfg. Co., Ltd., Osaka 599-0232 (JP)
(72) Inventor: Kobayashi, Hiroshi, c/o Tsubakimoto Chain Co, Kita-ku, Osaka 530-0018 (JP); Yoshimura, Yoshitaka, c/o Tsubakimoto Chain Co, Kita-ku, Osaka 530-0018 (JP); Imai, Masanao, c/o Tsubakimoto Chain Co, Kita-ku, Osaka 530-0018 (JP); Ochiai, Fumio, c/o Tsubakimoto Chain Co, Kita-ku, Osaka 530-0018 (JP); Sawata, Keiichi, Hannan-city Osaka 599-0232 (JP); Yagio, Nobolu, Hannan-city Osaka 599-0232 (JP); Kitada, Masayuki, Hannan-city Osaka 599-0232 (JP)
(74) Representative: Maisch, Thomas

(56) References cited:
- FR-A- 2 381 214
- GB-A- 2 257 221
- PATENT ABSTRACTS OF JAPAN vol. 2000, no. 17, 5 June 2001 (2001-06-05) -& JP 04 041039 A (FUKUSEN KOGYO KOFUN YUGENKOSHI; DAIAREN KOFUN YUGENKOSHI), 12 February 1992 (1992-02-12)
- PATENT ABSTRACTS OF JAPAN vol. 2003, no. 12, 5 December 2003 (2003-12-05) -& JP 2003 294090 A (ORIENTAL CHAIN MFG CO LTD), 15 October 2003 (2003-10-15)

## Description

### [TECHNICAL FIELD]

The present invention relates to a chain in which an inner link farmed by press-fitting both end portions of a pair of bushes into bush press-fitting holes of a pair of inner plates and an outer link formed by press-fitting both end portions of a pair of pins into pin press-fitting holes of a pair of outer plates are connected to each other by said pins, which penetrate through said bushes and protruded end portions of said pin are caulked.

### [BACKGROUND ART]

In a chain in which an inner link formed by press-fitting both end portions of a pair of bushes into bush press-fitting holes of a pair of inner plates and an outer link formed by press-fitting both end portions of a pair of pins into pin press-fitting holes of a pair of outer plates are connected to each other by said pins, which penetrate through said bushes and protruded end portions of said pin are caulked, a roller chain in which both protruded end surfaces of the pin are caulked in a tapered manner has been known (see for example Patent Reference 1).

[Patent Reference 1] Japanese Laid-open Patent Publication No. 2003-294090.

However, in a roller chain disclosed in the above-mentioned Japanese Laid-open Patent Publication No. 2003-294090, both protruded end surfaces of the pin are caulked in a tapered manner. Thus, when a chain is displaced, after removing a caulked portion with a grinder or the like, a pin must be pulled out. Accordingly, there is a problem that the displacement operation of the chain is not easy.

As a method for solving the above-mentioned problem, the following two methods have been performed. One method comprises caulking protruded both end portions of a hardness-reduced pin by subjecting the both end portions of the pin to previous annealing treatment. Since in this method the caulked portions of the pin are not hard, the pin can be pulled out through the inner surface of a bush by a punch even while the pin being caulked. The other method uses a pin previously subjected to copper plating on end portions of the pin and comprises caulking protruded both end portions of the pin. Since in this method the caulked portions of the pin are not hard, the pin can also be pulled out through the inner surface of a bush by a punch even while the pin being caulked.

Document JP 04041039 shows the preamble of the claim.

### [DISCLOSURE OF THE INVENTION]

### [PROBLEMS TO BE SOLVED BY THE INVENTION]

However, the above-mentioned two methods have the following problems respectively. Namely, since the above-mentioned one method comprises an annealing step it increases in cost. Further, since the caulking width is large, the pressing load during caulking is increased. On the other hand, since the other method comprises performing copper plating and removing the plating material, it not only increases in cost but also must care for environmental contamination. Further, since the caulking width is large, the pressing load during caulking is increased.

Thus, the object of the present invention is to provide a chain in which the ease of the caulking of a pin and displacement of the chain is improved and cost reduction is possible.

### [MEANS FOR SOLVING THE PROBLEMS]

To solve the above-mentioned problems, according to the invention of the claim, a chain in which an inner link formed by press-fitting both end portions of a pair of bushes into bush press-fitting holes of a pair of inner plates and an outer link formed by press-fitting both end portions of a pair of pins into pin press-fitting holes of a pair of outer plates are connected to each other by said pins, which penetrate through said bushes and protruded end portions of said pin are caulked, wherein an end surface of a thin wall thickness hollow cylindrical portion formed on the protruded end portion of said pin is axially caulked so that an annular bulge portion having an arc cross section is formed on the outer diameter side of said hollow cylindrical portion characterized in that

a caulked mark is formed on at least one end surface of said hollow cylindrical portion on a pitch line obtained by connecting the centers of end surfaces of a plurality of said pins.

### [EFFECTS OF THE INVENTION]

The invention according to claim 1 has the following effects. Namely, in the invention of claim 1, the caulking of a pin can be made with a pair of upper and lower caulking molds each having a simple structure. Further, since in the caulking of the pin a thin wall thickness hollow cylindrical portion of a pin is pressed, even a small pressing load may be used and ease of the caulking of the pin is improved.

Further, since a plastic deformation occurs on the inner diameter side (center side) of a hollow cylindrical portion of a pin at the caulking of the pin, the amount of plastic deformation on the outer diameter side of the hollow cylindrical portion is decreased so that an annular bulge portion having a substantially are cross section on the outer diameter side of the hollow cylindrical portion is slightly suppressed. Therefore, when a pin is pulled out by tapping it with a punch on the displacement of a chain, even if the pin is subjected to caulking with the pin usually heat-treated (carburized), and the pin can be easily passed through a pin press-fitting hole of the outer plate and an inner circumferential surface of a bush. Further, at the pulling out the pin, the pulling out of the pin is easily made by contacting a top end of a punch with a shallow circular recess of the pin to tap the recess with the punch. Further, at the pulling out of the pin it is not necessary to remove a caulked portion of the pin. Therefore, the ease of displacement of the chain is improved.

Further, according to the invention of claim 1, since it is not necessary to previously anneal end portions of a pin or to previously copper plate end portions of a pin and make heat treatment unlike a conventional chain, it is not necessary to care for environment unlike a case of copper plating and an increase in cost does not occur.

The invention of claim 2 has the following effects in addition to the effects of the invention of claim 1. Since a caulked mark is formed on at least one end surface of a hollow cylindrical portion of a pin, the determination whether caulking was made or not can be identified visually by presence or absence of a caulked mark, and a caulking mistake can be prevented. Further, since this caulked mark is formed on at least one end surface of a hollow cylindrical portion of a pin on a pitch line formed by connecting the centers of end surfaces of a plurality of pins of a chain, in a case where a high load is acted on the pin during use of the chain, the pin can be rotated. However, the determination whether the pin was rotated or not can be identified visually by confirming whether the caulked mark is shifted from the pitch line and the finding of disadvantage in the chain is easy.

### [BEST MODE FOR CARRYING OUT THE INVENTION]

In a chain in which an inner link formed by press-fitting both end portions of a pair of bushes into bush press-fitting holes of a pair of inner plates and an outer link formed by press-fitting both end portions of a pair of pins into pin press-fitting holes of a pair of outer plates are connected to each other by the pins, which penetrate through said bushes and protruded end portions of said pin are caulked, an end surface of a thin wall thickness hollow cylindrical portion formed on the protruded end portion of said pin is axially caulked so that an annular bulge portion having a substantially arc cross section is formed on the outer diameter side of the hollow cylindrical portion, and a V-shaped cross sectional convex portions (caulked marks) are farmed on both end surfaces of the hollow cylindrical portion on a pitch line obtained by connecting the centers of end surfaces of a plurality of pins. The example will be described below.

### [EXAMPLE]

An example of the present invention will be described based on FIGS. 1 to 6. In a roller chain 1 of an example of the present invention shown in FIGS. 1 and 2. An inner link 5 formed by press-fitting both end portions of a pair of bushes 4 each having a rotatable roller 3 into bush press-fitting holes of a pair of inner plates 2 and an outer link 8 formed by press-fitting both end portions of a pair of pins 7 into pin press-fitting holes of a pair of outer plates 6 are connected to each other by the pins 7, which penetrate through the bushes 4. And as will be described later, in the roller chain 1 connected by pins 7, both protruded end portions of the pin 7 are caulked with a caulking mold 11 shown in FIGS. 5 and 6.

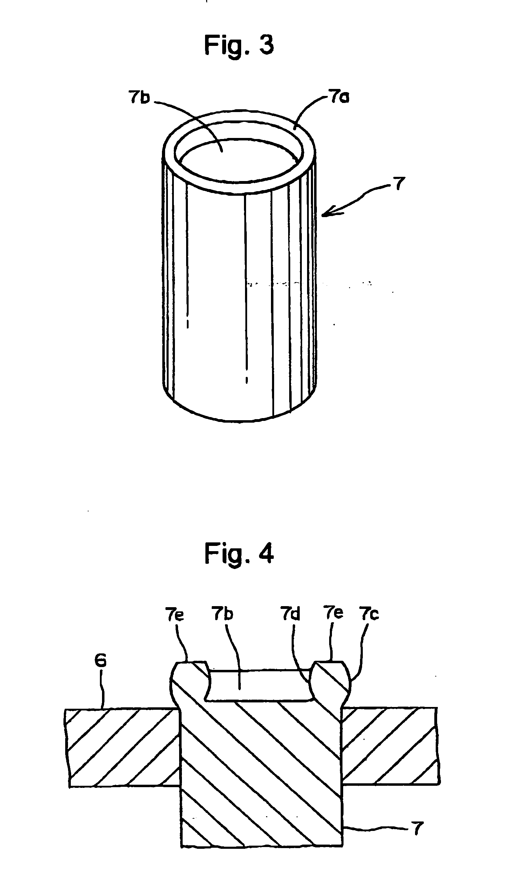

In both end portions of the pin 7 circular shallow recesses 7b are formed as shown in FIG. 3, and these circular shallow recesses 7b form a thin wall thickness hollow cylindrical portion 7a is formed.

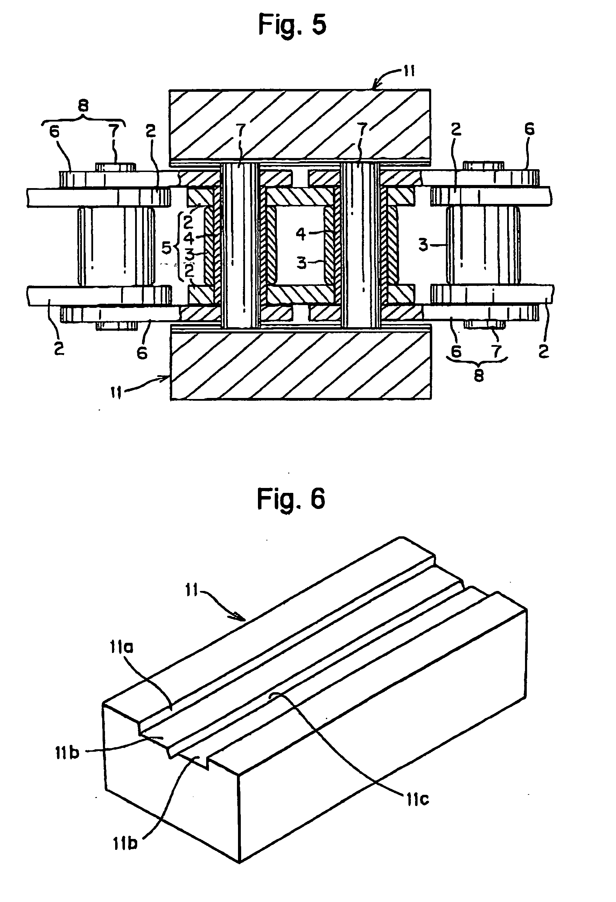

In a caulking mold 11 for caulking both protruded end portions of the pin 7, a longitudinal shallow groove 11a is formed on one side of the mold 11 as shown in FIG. 6, and a bottom surface 11b of this shallow groove 11a provides a flat surface. Further, a longitudinal V-groove 11c is formed on the bottom surface 11b.

As shown in FIG. 5, when the caulking molds 11 are disposed on both protruded end portions of the pin 7 in an opposed manner and pressing load is applied to the caulking molds 11, the hollow cylindrical portions 7a of the pin 7 are axially pressed so that the hollow cylindrical portions 7a are plastically deformed and caulked. And this caulking due to axial pressing forms an annular bulge portion 7c of a substantially arc cross section on an outer diameter side at the hollow cylindrical portion 7a, and the caulking forms an annular bulge portion 7d of a substantially arc cross section on an inner diameter side (central side) at the hollow cylindrical portion 7a as shown in FIG. 4. At the same time, convex portions 7e (caulked marks) each having a V-shaped cross section are formed on both end surfaces of the hollow cylindrical portions 7a on a pitch line 9 formed by connecting the centers of the end portions of a plurality of pins 7.

The constructed example as described above has the following actions and effects. Namely, caulking of the pin 7 can be performed with a pair of upper and lower molds 11 having a simple configuration. Further, since the thin wall thickness hollow cylindrical portion 7a of the pin 7 is pressed at the caulking of the pin 7, even a small pressing load may be used so that ease of the caulking of the pin 7 is improved.

Further, since a plastic deformation occurs on the inner diameter side (center side) of the hollow cylindrical portion 7a of a pin at the caulking of the pin, the amount of plastic deformation on the outer diameter side of the hollow cylindrical portion is decreased so that an annular bulge portion 7c having a substantially arc cross section on the outer diameter side of the hollow cylindrical portion 7a is slightly suppressed. Therefore, when the pin 7 is pulled out by tapping it with a punch at the displacement of a roller chain 1, even if the pin 7 is subjected to caulking with the pin usually heat-treated (carburized), the pin 7 can be easily passed through a pin press-fitting hole of the outer plate 6 and an inner circumferential surface of a bush 4. Further, at the pulling out the pin, the pulling out of the pin is easily made by contacting a circular shallow recess 7b of the pin 7 with the top end of a punch and tapping it with the punch. Further, at the pulling out of the pin it is not necessary to remove a caulked portion of the pin 7. Therefore, the ease of displacement of the roller chain 1 is improved.

Further, since convex portions 7e (caulked marks) each having a V-shaped cross section are formed on both end surfaces of a hollow cylindrical portion 7a of the pin 7, the determination whether caulking was made or not can be identified visually by presence or absence of a caulked mark, and a caulking mistake can be prevented. Further, since this convex portion 7e (caulked mark) having the V-shaped cross section is formed on the both end surfaces of the hollow cylindrical portion 7a of the pin 7 on a pitch line 9 formed by connecting the centers of end surfaces of a plurality of pins 7 of a roller chain, in a case where a high load is acted on the pin during use of the roller chain 1, the pin 7 can be rotated. However, the determination whether the pin was rotated or not can be identified visually by confirming whether the convex portion 7e (caulked mark) is shifted from the pitch line 9 and the finding of disadvantage in the roller chain 1 is easy.

Further, according to the example, since it is not necessary to previously anneal end portions of a pin or to previously copper plate end portions of a pin and make heat treatment unlike a conventional chain, it is not necessary to care for environment unlike a case of copper plating and an increase in cost does not occur.

Further, although in the above-mentioned example, the convex portions 7e (caulked marks) each having a V-shaped cross section are formed on both end portions of the hollow cylindrical portion 7a, concave portions may be formed instead of the convex portions 7e each having the V-shaped cross section. When this concave portion is formed, a caulking mold is used in which an axial convexly protruded streak is axially formed on the bottom surface 11b of the groove 11a in the caulking mold 11.

Alternatively, although in the example, the convex portions 7e (caulked marks) each having a V-shaped cross section are formed on both end portions of the hollow cylindrical portion 7a, a caulked mark may be provided by forming a convex portion or a concave portion on only one end surface of this hollow cylindrical portion 7a. And when the convex portion or the concave portion is formed on only one end surface of this hollow cylindrical portion 7a, as a caulking mold, which opposes on the other end surface where a convex portion or a concave portion is not formed, a flat bottom surface 11b in the axial shallow groove 11a for the caulking mold 11 shown in FIG. 6 is used.

Further, a cross sectional shape of the convex portion or the concave portion forming a caulked mark is not limited particularly.

Further, in the example, the roller chain 1 is shown. However, the inventions according to claims 1 and 2 can be applied to a bush chain having a roller.

### [BRIEF DESCRIPTION OF THE DRAWINGS]

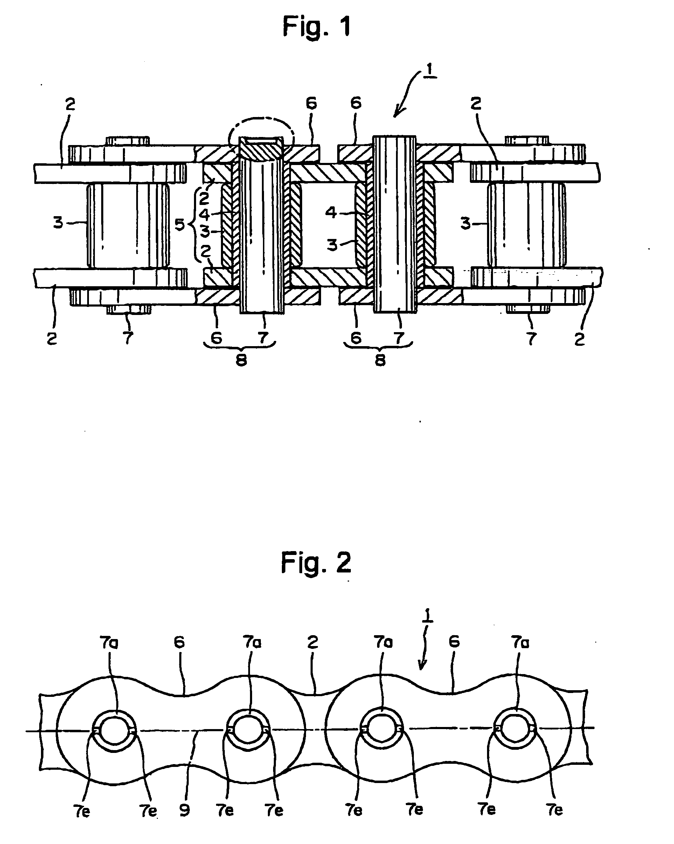

[FIG. 1] FIG. 1 is a plan view showing a roller chain of an example of the present invention as a partial cross section.
[FIG. 2] FIG. 2 is a side view of the roller chain shown in FIG. 1.
[FIG. 3] FIG. 3 is a perspective view of a pin used in the roller chain shown in FIG. 1.
[FIG. 4] FIG. 4 is a cross sectional view showing a part in the oval circle in FIG. 1.
[FIG. 5] FIG. 5 is a schematic explanatory view showing a state when both protruded end portions of a pin in the roller chain of the example in the present invention is caulked with a caulking mold as a partial cross section.
[FIG. 6] FIG. 6 is a perspective view of the caulking mold shown in FIG. 5.

### [DESCRIPTION OF REFERENCE NUMERALS]

1 ... Roller chain
2 ... Inner plate
3 ... Roller
4 ... Bush
5 ... Inner link
6 ... Outer plate
7 ... Pin
7a ... Hollow cylindrical portion
7b ... Circular shallow groove
7c ... Annular bulge portion having a substantially arc cross section on an outer diameter side
7d ... Annular bulge portion having a substantially arc cross section on an inner diameter side
7e ... Convex portion (caulked mark) having a V-shaped cross section
8 ... Outer link
9 ... Pitch line
11 ... Caulking mold
11a ... Axial shallow groove
11b ... Bottom surface of a groove
11c ... Axial V groove

## Claims

1. A chain (1) in which an inner link (5) formed by press-fitting both end portions of a pair of bushes (4) into bush press-fitting holes of a pair of inner plates (2) and an outer link (8) formed by press-fitting both end portions of a pair of pins (7) into pin press-fitting holes of a pair of outer plates (6) are connected to each other by said pins (7), which penetrate through said bushes (4) and protruded end portions of said pin (7) are caulked, wherein an end surface of a thin wall thickness hollow cylindrical portion (7a) formed on the protruded end portion of said pin (7) is axially caulked so that an annular bulge portion (7c) having an arc cross section is formed on the outer diameter side of said hollow cylindrical portion (7a),
**characterized in that** a caulked mark (7e) is formed on both end surfaces of said hollow cylindrical portion (7a) on a pitch line (9) obtained by connecting the centers of end surfaces of a plurality of said pins (7).

## Patentansprüche

1. Eine Kette (1), bei der ein inneres Kettenglied (5), das durch Einpressen beider Endabschnitte eines Paars von Hülsen (4) in Hülseneinpressdurchgänge eines Paars von inneren Kettenlaschen (2) ausgebildet ist, und ein äußeres Kettenglied (8), das durch Einpressen beider Endabschnitte eines Paars von Stiften (7) in Stifteinpressdurchgänge eines Paars von äußeren Kettenlaschen (6) ausgebildet ist, mittels der Stifte (7) miteinander verbunden sind, die sich durch die Hülsen (4) erstrecken, und bei der herausstehende Endabschnitte der Stifte (7) verstemmt sind, wobei eine Endfläche eines hohlen zylindrischen Abschnitts (7a) mit dünner Wanddicke, die an dem herausstehenden Endabschnitt des Stifts (7) ausgebildet ist, axial verstemmt ist, so dass ein ringförmiger verdickter Abschnitt (7c) mit einem bogenförmigen Querschnitt auf der Seite des äußeren Durchmessers des hohlen zylindrischen Abschnitts (7a) ausgebildet ist,
**dadurch gekennzeichnet, dass** eine verstemmte Markierung (7e) an beiden Endflächen des hohlen zylindrischen Abschnitts (7a) auf einer Teillinie (9) ausgebildet ist, die durch ein Verbinden der Mittelpunkte der Endflächen einer Vielzahl der Stifte (7) erhalten ist.

## Revendications

1. Chaîne (1) dans laquelle, un maillon interne (5) formé en ajustant à la presse les deux parties d'extrémité d'une paire de douilles (4) dans des trous de douille ajustés à la presse d'une paire de plaques internes(2) et un maillon externe (8) formé en ajustant à la presse les deux parties d'extrémité d'une paire de broches (7) dans des trous de broche ajustés à la presse d'une paire de plaques externes (6) sont raccordés entre eux par lesdites broches (7) qui pénètrent à travers lesdites douilles (4), et les parties d'extrémité en saillie de ladite broche(7) sont matées, dans laquelle une surface d'extrémité d'une partie cylindrique creuse (7a) à épaisseur de paroi fine formée sur la partie d'extrémité en saillie de ladite broche (7) est matée de manière axiale de sorte qu'une partie de renflement annulaire (7c) ayant une section transversale en forme d'arc est formée du côté du diamètre externe de ladite partie cylindrique creuse (7a),
**caractérisée en ce qu'**une marque matée (7e) est formée sur les deux surfaces d'extrémité de ladite partie cylindrique creuse (7a) sur une ligne de pas (9) obtenue en raccordant les centres des surfaces d'extrémité d'une pluralité desdites broches (7).
